# EUROPEAN PATENT APPLICATION

(11) **EP 2 141 374 A2**
(43) Date of publication of application: **06.01.2010**
(21) Application number: 09008548.1
(22) Date of filing: 30.06.2009
(51) Int. Cl.: F16C 19/18, F16C 33/62, F16C 33/64, F16D 1/076

(54) **Wheel bearing apparatus**

(30) Priority: 30.06.2008 JP 2008170277; 31.07.2008 JP 2008198576
(71) Applicant: JTEKT Corporation, Osaka-shi Osaka 542-8502 (JP)
(72) Inventor: Ishikawa, Tetsuya, Osaka-shi Osaka 542-8502 (JP); Iwamoto, Kiyokane, Osaka-shi Osaka 542-8502 (JP); Takimoto, Masao, Osaka-shi Osaka 542-8502 (JP); Harada, Katsuyuki, Osaka-shi Osaka 542-8502 (JP); Anno, Hiroshi, Osaka-shi Osaka 542-8502 (JP); Kato, Kenji, Osaka-shi Osaka 542-8502 (JP); Hasegawa, Kenichi, Osaka-shi Osaka 542-8502 (JP)
(74) Representative: Schaeberle, Steffen

(57) **Abstract**

A bearing apparatus (1) includes an inner ring (6) including a flange (11) a tubular portion (13) which has an end face; an outer ring (9) coupled to the inner ring (6) through a plurality of rolling elements (8); and a drive force-receiving portion (20) including a plurality of teeth (21) which is radially formed on the end face in a direction intersecting an axial direction. A surface, of the each teeth (21) is coated by a coating (30).

## Description

### CROSS-REFERENCE TO RELATED APPLICATIONS

This application claims priority from Japanese Patent Application No. 2008-198576 filed on July 31, 2008 and 2008-170277 filed on June 30, 2009, and the subject matters of which are incorporated herein by references.

### TECHNICAL FIELD

This invention relates to a wheel bearing apparatus mounted, for example, at a distal end portion of a drive shaft via a constant velocity joint so as to rotatably support a wheel.

### BRIEF DESCRIPTION OF RELATED ARTS

Wheel bearing apparatuses each for rotatably supporting a wheel are used in a vehicle such as an automobile. One related wheel bearing apparatus of this type includes an inner ring having a tubular portion, an inner ring member and a flange, and an outer ring coupled to the inner ring through a plurality of rolling elements. There is known one such wheel bearing apparatus of the type coupled to a constant velocity joint mounted on a distal end portion of a drive shaft. As the construction of coupling the wheel bearing apparatus and the constant velocity joint together, there is known the type in which a drive force-receiving portion having a plurality of radially-arranged teeth is formed on an end face of the tubular portion, and a drive force-transmitting portion having a plurality of radially-arranged teeth is formed on a cup-shaped outer ring of the constant velocity joint, and the drive force-receiving portion and the drive force-transmitting portion are fitted to each other so as to transmit a drive force of the constant velocity joint to the tubular portion of the wheel bearing apparatus (see, for example, JP-A-63-184501).

In the inner ring of this type, the inner ring member is fitted on the tubular portion, and thereafter an end portion of the tubular portion is caulked or press-deformed, thereby preventing the inner ring member from withdrawal from the tubular portion. After the inner ring member is thus fitted on the tubular portion, and is fixed thereto, the teeth of the drive force-receiving portion are formed on the end face of the tubular portion.

However, the teeth are formed on the tubular portion after the inner ring member is fixed to the tubular portion, and therefore a hardening treatment such as hardening can not be applied to the surfaces of the teeth of the drive force-receiving portion. The tubular portion required to be caulked or press-deformed is made of a relatively soft material, and therefore the surfaces of the teeth of the drive force-receiving portion are relatively soft. Therefore, in the mutually-fitted condition of the drive force-receiving portion and the drive force-transmitting portion, when the teeth of the drive force-receiving portion and the teeth of the drive force-transmitting portion rub against each other, it is feared that the surfaces of the teeth of the drive force-receiving portion as well as the surfaces of the teeth of the drive force-transmitting portion may be worn.

It is desirable that not only the wear of the surfaces of the teeth of the drive force-receiving portion but also the deterioration of these teeth due to rust and others should be prevented.

### SUMMARY

It is therefore an object of this invention to provide a wheel bearing apparatus in which the deterioration of teeth of a drive force-receiving portion can be suppressed for a long period of time without applying a heat treatment thereto.

The one aspect of the present invention is a bearing apparatus including an inner ring including a flange a tubular portion which has an end face; an outer ring coupled to the inner ring through a plurality of rolling elements; and a drive force-receiving portion including a plurality of teeth which is radially formed on the end face in a direction intersecting an axial direction.. A surface of the each teeth is coated by a coating.

In this construction, the film-forming treatment is applied to the teeth of the drive force-receiving portion. Therefore, the teeth of the drive force-receiving portion can be prevented from deterioration.

The coating may include an abrasion resistant film-forming treatment. In this construction, the abrasion resistant film-forming treatment is applied to the teeth of the drive force-receiving portion. Therefore, even when the teeth of the drive force-receiving portion rub against teeth of a drive force-transmitting portion in a mutually-fitted condition of the drive force-receiving portion and the drive force-transmitting portion, wear of the surfaces of the teeth of the drive force-receiving portion can be prevented. Examples of the abrasion resistant film-forming treatment include a phosphate coating treatment and a metal (such as zinc) plating treatment.

The film-forming treatment can include a grease coating treatment (claim 3). In this construction, grease is coated on the surfaces of the teeth of the drive force-receiving portion. Therefore, a frictional resistance of the teeth of the drive force-receiving portion can be reduced, so that the wear of the surfaces of the teeth can be prevented. And besides, the coated grease can prevent rust from developing on the surface of the teeth.

### BRIEF DESCRIPTION OF THE DRAWINGS

Fig. 1 is a schematic view roughly showing the construction of a vehicle on which one preferred embodiment of wheel bearing apparatuses of the exemplary embodiment are mounted.
Fig. 2 is a longitudinal cross-sectional view roughly showing the construction of an assembly of the wheel bearing apparatus of the exemplary embodiment and a constant velocity joint.
Fig. 3 is a side-elevational view of the wheel bearing apparatus of Fig. 2 as seen from the drive shaft side.
Fig. 4 is a side-elevational view of the constant velocity joint as seen from the wheel side.
Fig. 5 is a cross-sectional view taken along the line A-A of Fig. 3.
Fig. 6 is a cross-sectional view of an important portion of a second embodiment of a wheel bearing apparatus of the invention.
Fig. 7 is a cross-sectional view of an important portion of a third embodiment of a wheel bearing apparatus of the invention.
Fig. 8 is an expanded view of the fastening member under correct fitting condition between the drive force-receiving portion and the driving force-transmitting portion.
Fig. 9 is an expanded view of the fastening member under incorrect fitting condition between the drive force-receiving portion and the driving force-transmitting portion.
Fig. 10 is a plan view showing the fastening member form axial outside.

### DETAIL DESCRIPTION OF THE EXEMPLARY EMBODIMENTS OF THE PRESENT INVENTION

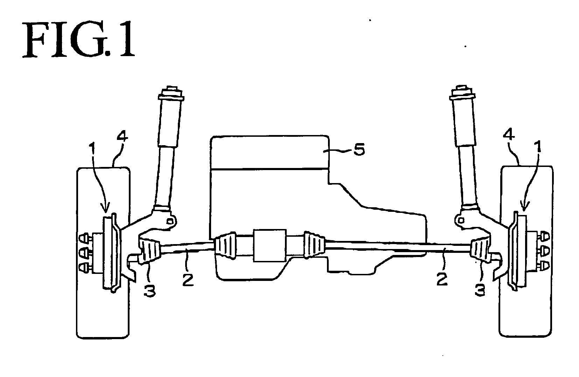

Fig. 1 is a schematic view roughly showing the construction of a vehicle on which one preferred embodiment of wheel bearing apparatuses 1 of the present invention are mounted.

The pair of left and right wheel bearing apparatuses 1 and 1 are mounted respectively at distal end portions of drive shafts 2 through respective constant velocity joints 3. Left and right wheels 4 and 4 are rotatably supported respectively by the wheel bearings 1 and 1. A drive force from an engine 5 is applied to each drive shaft 2, and is then transmitted from the drive shaft 2 to the wheel bearing apparatus 1 via the constant velocity joint 3, so that the wheel 4 supported on the wheel bearing apparatus 1 is rotated.

The present invention is directed to the improved wheel bearing apparatus 1 for transmitting the drive force (transmitted from the engine 5 via the drive shaft 2, etc.) to the wheel 4. One preferred embodiment of the wheel bearing apparatus 1 of the invention will now be described specifically.

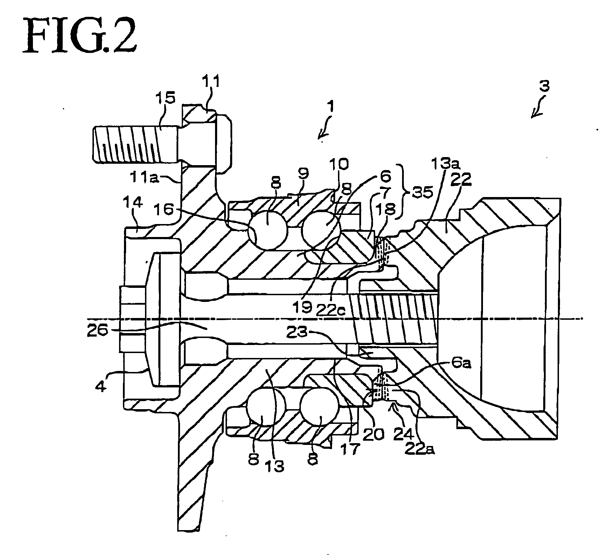

Fig. 2 is a longitudinal cross-sectional view roughly showing the construction of an assembly comprising the wheel bearing apparatus 1 of the invention and the constant velocity joint 3.

The wheel bearing apparatus 1 includes an inner shaft 6, an inner ring member 7 fitted on the inner shaft 6 such that an end portion (right end portion in Fig. 2) 6a of the inner shaft 6 projects a predetermined amount from the inner ring member 7, and an outer ring 9 coupled to the inner shaft 6 and the inner ring member 7 through a plurality of balls (rolling elements) 8 so as to enable the inner shaft 6 to rotate together with the inner ring member 7 relative to the outer ring 9. The inner shaft 6 and the inner ring member 7 jointly form an inner ring 35.

The wheel bearing apparatus 1 is fixed to a suspension device (not shown) through an outer ring flange 10 formed on the outer ring 9. The wheel 4 (see Fig. 1) is fixed to an inner ring flange (flange) 11 formed on the inner shaft 6. A drive force from the engine 5 (see Fig. 1) is transmitted to the inner shaft 6. When the drive force from the engine 5 is thus transmitted to the inner shaft 6, the wheel 4 rotates together with the inner shaft 6.

The wheel bearing apparatus 1 is constructed to function, for example, as a double row angular contact ball bearing. The plurality of balls 8 are arranged in two annular rows. One row (first row) of balls 8 are held between the inner shaft 6 and the outer ring 9. The other row (second row) of balls 8 are held between the inner ring member 7 and the outer ring 9. An internal clearance in the wheel bearing apparatus 1 is, for example, a negative clearance, so that a preload is applied to the balls 8.

The inner shaft 6 includes a tubular portion (cylindrical portion) 13 extending in a direction (right-left direction in Fig. 2)of an axis of the inner shaft 6, the inner ring flange 11 of an annular plate-shape formed at a wheel-side end portion (left end portion (Fig. 2) disposed near to the wheel 4) of the tubular portion 13, and a cylindrical spigot portion 14. The inner ring flange 11, the tubular portion 13 and the spigot portion 14 are formed into an integral or one-piece construction, and are disposed coaxially with one another, and are made of carbon-steel such for example as S55C and SS55. Namely, the tubular portion 13 is made of a relatively soft material. The inner ring flange 11 is formed on and extends radially outwardly from the outer periphery of the wheel-side end portion (left end portion in Fig. 2) of the tubular portion 13. The spigot portion 14 is formed on and projects axially from the wheel-side end (left end in Fig. 2) of the tubular portion 13 toward the wheel 4.

The wheel 4 is fixed to the inner ring flange 11 with a brake disk rotor (not shown) of an annular plate-shape held therebetween. A wheel-side end face 11a (disposed near to the wheel 4) of the inner ring flange 11 is formed into a flat surface, and this end face 11a serves as a mounting surface for the mounting of the brake disk rotor thereon. The brake disk rotor is fitted on the cylindrical spigot portion 14, and is mounted on the mounting surface defined by the end face 11a. At this time, the outer periphery of the spigot portion 14 closely contacts the inner periphery of the brake disk rotor, so that the brake disk rotor is positioned relative to the inner ring flange 11.

A plurality of fixing bolts 15 (only one of which is shown in Fig. 2) are provided at an outer peripheral portion of the inner ring flange 11. The plurality of fixing bolts 15 are spaced from one another in a circumferential direction, and are arranged in an annular row. The brake disk rotor and the wheel 4 are firmly fixed to the inner ring flange 11 by the plurality of fixing bolts 15 and a plurality of nuts (not shown) threaded respectively on the fixing bolts 15.

The tubular portion 13 projects from the inner ring flange 11 toward the drive shaft 2. A first raceway surface 16 of an annular shape is formed on an axially-intermediate portion of the outer peripheral surface of the tubular portion 13, and the first row of balls 8 are disposed on this first raceway surface 16. An annular groove 17 is formed in that portion of the outer peripheral surface of the tubular portion 13 spaced from the first raceway surface 16 toward the drive shaft 2 in adjacent relation to the first raceway surface 16. The inner ring member 7 is fitted on this annular groove 7. A distal end portion (right end portion (Fig. 2) disposed near to the drive shaft 2) of the tubular portion 13 is pressed to be radially outwardly expanded to form a caulked portion 18 which is caulked (or press-deformed) on a side face of the inner ring member 7. The caulked portion 18 is formed, for example, by a rolling caulking operation in which a caulking jig is held against the distal end portion of the tubular portion 13, and in this condition the caulking jig, while inclined at a predetermined angle relative to the center axis of the tubular portion 13, is pressed in the axial direction, thereby forming the caulked portion 18. The caulked portion 18 prevents the inner ring member 7 from being withdrawn from the tubular portion 13 in the axial direction. The outer periphery of the inner ring member 7 is disposed radially outwardly of the outer periphery of the caulked portion 18. A second raceway surface 19 of an annular shape continuous with the first raceway surface 16 is formed on the outer peripheral surface of the inner ring member 7. A drive force-receiving portion 20 is formed on an axial end face (right end face in Fig. 2) of the caulked portion 18, that is, on a drive shaft-side end face 13a (disposed near to the drive shaft 2) of the tubular.portion 13.

The constant velocity joint 3 is, for example, a ball-type constant velocity joint, and includes an inner ring (not shown) coupled to the drive shaft 2 (see Fig. 1) so as to rotate therewith, a cup-shaped outer ring (driving shaft) 22 coupled to the inner ring through a plurality of balls (not shown). The constant velocity joint 3 is mounted on the wheel bearing apparatus 1 with the cup-shaped outer ring 22 coupled to the inner shaft 6.

A tubular projecting portion 23 is formed on and projects-from an axial distal end portion 22a (left end portion in Fig. 2) of the cup-shaped outer ring 22 toward the wheel 4. Internal threads are formed on an inner peripheral surface of the tubular projecting portion 23. A drive force-transmitting portion 24 is formed on a coupling end face (axial end face) 22c. of the cup-shape outer ring 22 surrounding the tubular projecting portion 23. This drive force-transmitting portion 24 is fitted to the drive force-receiving portion 20 of the inner shaft 6.

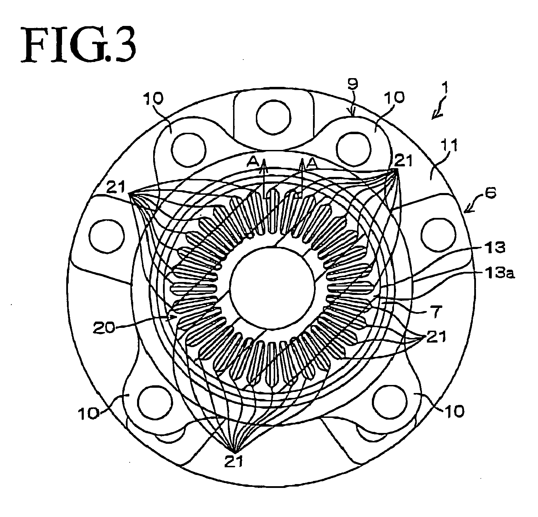

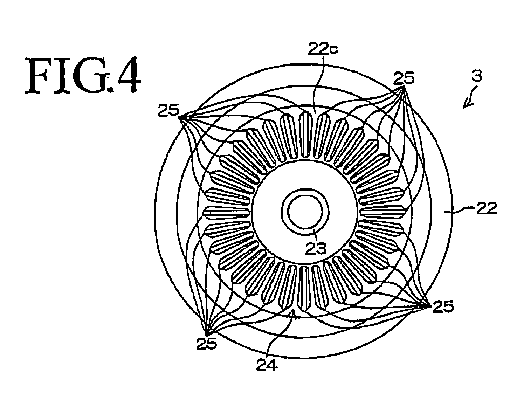

The tubular projecting portion 23 of the cup-shaped outer ring 22 is inserted into the inner shaft 6 from the drive shaft-side end portion 6a thereof, and also a coupling bolt 26 is inserted into the inner shaft 6 from the wheel-side end thereof, and a externally-threaded portion formed on a distal end portion of the coupling bolt 26 is threadedly engaged with the internal threads formed on the inner peripheral surface of the tubular projecting portion 23. By doing so, the wheel bearing apparatus 1 and the constant velocity joint 3 are coupled together. When the wheel bearing apparatus 1 and the constant velocity joint 3 are thus coupled together, teeth 21 (see Fig. 3) of the drive force-receiving portion 20 of the inner shaft 6 are meshed with teeth 25 (see Fig. 4) of the drive force-transmitting portion 24 of the cup-shaped outer ring 22. Because of the fitting between the drive force-receiving portion 20 and the drive force-transmitting portion 24, a drive force from the engine 5 is transmitted to the inner shaft 6 and the inner ring member 7 via the constant velocity joint 3. As a result, the inner shaft 6 and the inner ring member 7 rotate relative to the outer ring 9, and the wheel 4 rotates in accordance with the rotation of the inner shaft 6.

A structure of a fastening member 4 is described more detail. The fastening member 4 is designed to prevent the drive force-receiving portion 20 and the drive force-transmitting portion 24 from being incorrectly fitted. The fastening portion 4 is utilized to confirm that whether the inner shaft and the cup-shaped outer ring 22 are correctly engaged or not.

The fastening member 6 includes the screw portion 2c of the constant velocity joint 3, and a nut 41 adapted to be threaded on a screw portion 42c. The nut 41 has a generally cylindrical shape, and includes a threading portion 41a of a hollow cylindrical shape having internal threads formed on its inner peripheral surface and adapted to be threadedly engaged with the screw portion 42c, and a cylindrical portion 41b formed on and extending axially outwardly from an axially-outer end face of the threading portion 41a. In this embodiment, an ordinary nut available in the market is used as the nut 41. When the nut 41 is threaded on the screw portion 42c, a vehicle body-side (or axially-inner) end face of the threading portion 41a of the nut 41 is held in contact with the flange surface 11a of the inner ring flange 11. As a result, the cup-shaped outer ring 22 and the inner shaft 6 are fixed to each other.

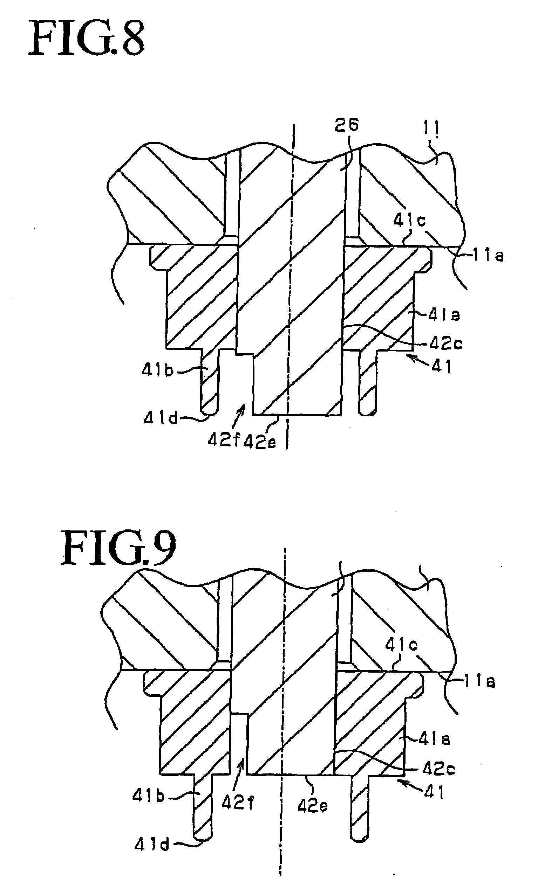

In this configuration, when the drive force-receiving portion 20 of the inner shaft 6 and the drive force-transmitting portion 24 of the cup-shaped outer ring 22 are properly fitted to each other, an axial position of an axially-outer end face (hereinafter referred to merely as "end face") 42e of the screw portion 42c and an axial position of an axially-outer end face (hereinafter referred to merely as "end face") 41d of the cylindrical portion 41b of the nut 41 generally coincide with each other (see Fig. 8). Here, the term "generally coincide" means such a level that the worker or operator can recognize with the eyes that the axial position of the end face 42e of the screw portion 42c and the axial position of the end face 41d of the nut 41 coincide with each other. Such a degree of difference in axial position between the end face 42e and the end face 41d which can not be recognized with the eyes falls within the concept of "generally coincide".

On the other hand, when the drive force-receiving portion 20 and the drive force-transmitting portion 24 are not properly fitted to each other, the axial position of the end face 42e of the screw portion 42c does not coincide with the axial position of the end face 41d of the nut 41 (see Fig. 9). Namely, the end.face 42e of the screw portion 42c is disposed axially inwardly of the end face 41d of the nut 41, that is, is offset from the end face 41d toward the vehicle body.

Therefore, whether or not the drive force-receiving portion 20 and the drive force-transmitting portion 24 are properly fitted to each other can be confirmed by judging whether or not the axial position of the end face 42e of the screw portion 42c and the axial position of the end face 41d of the nut 41 coincide with each other. Namely, the screw portion 42c and the nut 41 form judgment members for judging the fitted condition of the drive force-receiving portion 20 and the drive force-transmitting portion 24. More specifically, the judgment members (judgment portions) are the end face 42e of the screw portion 42c and the end face 41d of the nut 41, respectively. Particularly, the end face 42e of the screw portion 42c and the end face 41d of the nut 41 are exposed to the exterior of the rolling bearing apparatus 1. Therefore, after assembling the inner shaft 6 and cup-shaped outer ring 22 together, the worker can easily confirm with the eyes whether or not the axial position of the end face 42e of the screw portion 42c and the axial position of the end face 41d of the nut 41 coincide with each other. As a result, the drive force-receiving portion 20 of the constant velocity joint 3 and the drive force-transmitting portion 24 of the inner shaft 6 can be properly fitted to each other, and therefore a running torque of the constant velocity joint 3 can be efficiently transmitted to the inner shaft, and also the idling of the cup-shaped outer ring 22 relative to the inner shaft 6 can be prevented.

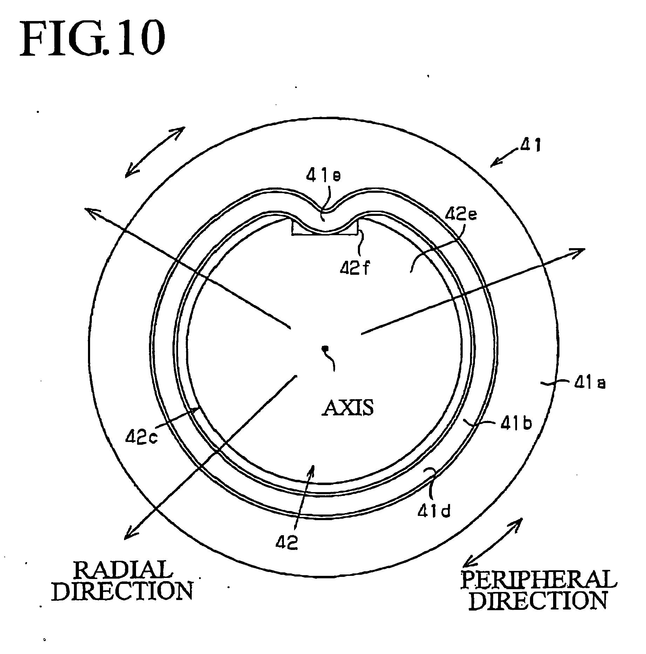

As shown in Fig.10, a recess 42f is formed in a portion of the outer peripheral surface of the screw portion 42c, and is recessed radially inwardly. The cylindrical portion 41b is opposed to the recess 42f of the screw portion 42c in the radial direction. The cylindrical portion 41b of the nut 41 is press-deformed into the recess 42f (that is, that portion of the cylindrical portion 41b radially opposed to the recess 42f is press-deformed radially inwardly into the recess 42f). The portion (hereinafter referred to as "deformed portion") 41e of the cylindrical portion 41b thus press-deformed into the recess 42f is received and retained in the recess 42f. Namely, the nut 41 is retained on the constant velocity joint 3. Therefore, the movement of the nut 41 in the circumferential direction relative to the shaft portion 42b is prevented by the deformed portion 41e received in the recess 42f. Namely, the recess 42f and the deformed portion 41e serve to prevent the rotation of the nut 41 relative to the shaft portion 42b. Therefore, the nut 41 is prevented from becoming loosened relative to the shaft portion 42b, and there can be provided the bearing apparatus of a high reliability.

If the cylindrical portion 41b of the nut 41 is press-deformed when the axial position of the end face 42e of the screw portion 42c is not coincident with the axial position of the end face 41d of the nut 41 (see Fig. 9), a resultant press-deformed portion 41e is different in shape from the press-deformed portion 41e obtained when the drive force-receiving portion 20 and the drive force-transmitting portion 24 are properly fitted to each other. Therefore, the fitted condition of the drive force-receiving portion 20 and drive force-transmitting portion 24 of the constant velocity joint 3 and inner shaft 6 can be confirmed. Namely, when the axial position of the end face 42e of the screw portion 42c is not coincident with the axial position of the end face 41d of the nut 41, the recess 42f is not opposed to the cylindrical portion 41b in the radial direction, and therefore the cylindrical portion 41b of the nut 41 can not be properly press-deformed into the recess 42f of the screw portion 42c. Therefore, after confirming the axial height of the end face 42e of the screw portion 42c and the axial height of the end face 41d of the nut 41, the cylindrical portion 41b of the nut 41 is press-deformed into the recess 42f of the screw portion 42c, and by doing so, the fitted condition of the drive force-receiving portion 20 and the drive force-transmitting portion 24 can be again confirmed. Namely, after confirming the axial height of the end face 42e of the screw portion 42c and the axial height of the end face 41d of the nut 41, the fitted condition of the drive force-receiving portion 20 and the drive force-transmitting portion 24 can be again confirmed from the shape of the deformed portion 41e of the nut 41. As a result, the fitted condition of the he drive force-receiving portion 20 and the drive force-transmitting portion 24 can be more positively confirmed. Accordingly, the cup-shaped outer ring 22 and the inner shaft 6 assembled together in such a manner that he drive force-receiving portion 20 and the drive force-transmitting portion 24 are not properly fitted to each other, can be removed. Therefore, the running torque of the constant velocity joint 3 can be efficiently transmitted to the inner shaft 6, and also the idling of the constant velocity joint 3 relative to the inner shaft 6 can be prevented.

Fig. 3 is a side-elevational view of the wheel bearing apparatus 1 as seen from the drive shaft side.

The drive force-receiving portion 20 has the plurality of teeth 21 (see Fig. 3) extending radially in perpendicular relation to the axial direction. The plurality of teeth 21 are arranged at equal intervals (that is, at equal angular intervals) in the circumferential direction, and each of the teeth 21 has a triangular cross-section. After the caulked portion 18 is formed at the distal end portion of the tubular portion 13, for example, a teeth-forming punch is pressed against the end face 13a of the tubular portion 13 to plastically deform the same, thereby forming the drive force-receiving portion 20. The caulked portion 18 may be formed simultaneously with the formation of the drive force-receiving portion 20.

The teeth 21 of the drive force-receiving portion 20 are formed after the inner ring member 7 is fitted on the tubular portion 13 and is fixed thereto. Therefore, a hardening treatment such as hardening can not be applied to the surfaces of the teeth 21 of the drive force-receiving portion 20. The tubular portion 13 is made of the relatively soft material as described above, and therefore the surfaces of the teeth 21 of the drive force-receiving portion 20 are relatively soft.

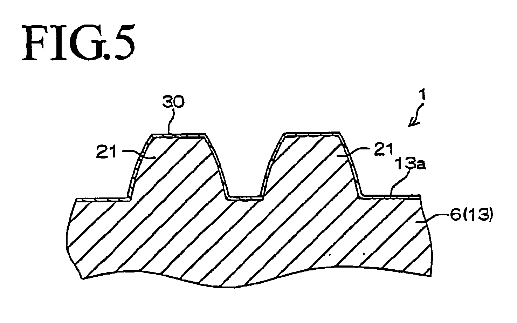

A phosphate coating film 30 (see Fig. 5) is formed on the surfaces of the teeth 21 of the drive force-receiving portion 20 and the end face 13a of the tubular portion 13 over entire areas thereof by a parkerizing treatment (a phosphate coating treatment) serving as a abrasion resistant film-forming treatment. The areas coatinged with this phosphate coating film 30 are indicated by parallel slanting lines in Fig. 3. Examples of this phosphate coating film 30 include a zinc phosphate coating film and a manganese phosphate coating film. The surfaces of the teeth 21 of the drive force-receiving portion 20 and the end face 13a of the tubular portion 13 are protected over the entire areas thereof by the phosphate coating film 30.

Fig. 4 is a side-elevational view of the constant velocity joint 3 as seen from the wheel side.

The drive force-transmitting portion 24 has the plurality of teeth 25 extending radially in perpendicular relation to the axial direction. The plurality of teeth 25 are arranged at equal intervals (that is, at equal angular intervals) in the circumferential direction, and each of the teeth 25 has a triangular cross-section.

A phosphate coating film (similar to the phosphate coating film 30 shown in Fig. 5) is formed on the surfaces of the teeth 25 of the drive force-transmitting portion 24 and the coupling end face 22c of the cup-shaped outer ring 22 over entire areas thereof by a parkerizing treatment (a phosphate coating treatment) serving as a abrasion resistant film-forming treatment. The areas coated with this phosphate coating film are indicated by parallel slanting lines in Fig. 4. Examples of this phosphate coating film includes a zinc phosphate coating film and a manganese phosphate coating film. The surfaces of the teeth 25 of the drive force-transmitting portion 24 and the connecting end face 22c of the cup-shaped outer ring 22 are protected over the entire areas thereof by this phosphate coating film.

As described above, in this embodiment, the phosphate coating film 30 is formed on the surfaces of the teeth 21 of the drive force-receiving portion 20 and the end face 13a of the tubular portion 13 by the parkerizing treatment, and similarly the phosphate coating film is formed on the surfaces of the teeth 25 of the drive force-transmitting portion 24 and the connecting end face 22c of the cup-shaped outer ring 22 by the parkerizing treatment. Therefore, in the mutually-fitted condition of the drive force-receiving portion 20 and the drive force-transmitting portion 24, even when the teeth 21 and the teeth 25 rub against each other, or the teeth 21 and the teeth 25 rub respectively against the end face 22c and the end face 13a, wear of the teeth 21 and 25 can be prevented.

And besides, rust can be prevented from developing on the surfaces of the teeth 21 of the drive force-receiving portion 20 and the surfaces of the teeth 25 of the drive force-transmitting portion 24.

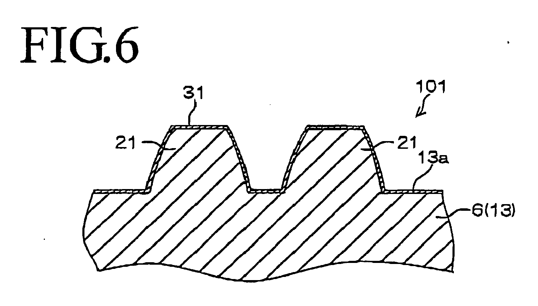

Fig. 6 is a cross-sectional view of an important portion of another (second) embodiment of a wheel bearing apparatus 101 of the invention. In this second embodiment, those portions corresponding to the portions of the above (first) embodiment of Figs. 1- to-5 will be designated respectively by identical reference numerals used in Figs. 1 to 5, and explanation thereof will be omitted.

The wheel bearing apparatus 101 of the second embodiment differs from the wheel bearing apparatus 1 of the first embodiment in that instead of the parkerizing treatment, a galvanizing treatment (zinc plating treatment) serving as a abrasion resistant film-forming treatment is applied to surfaces of teeth 21 of a drive force-receiving portion 20, surfaces of teeth 25 of a drive force-transmitting portion 24, an end face 13a of a tubular portion 13 and a connecting end face 22c of a cup-shaped outer ring 22 (In Fig. 6, only a zinc plating film 31 formed on the surfaces of the teeth 21 and the end face 13a of the tubular portion 13 is shown.). The zinc plating film 31 is formed on the teeth 21 and the end face 13 a by the galvanizing treatment, and also a similar zinc plating film is formed on the teeth 25 and the connecting end face 22a by the galvanizing treatment. Since the galvanizing treatment is applied to the surfaces of the teeth 21, the surfaces of the teeth 25, the end face 13a and the connecting end face 22c, wear of the surfaces of the teeth 21 and 25 is prevented. The metallic film formed by this plating treatment is not limited to the zinc plating film, and any other suitable metallic film such for example as a film of chromium or nickel can be used. And besides, rust is prevented from developing on the surfaces of the teeth 21 of the drive force-receiving portion 20 and the surfaces of the teeth 25 of the drive force-transmitting portion 24.

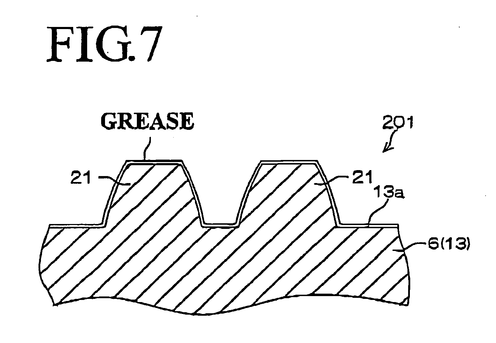

Fig. 7 is a cross-sectional view of an important portion of a further (third) embodiment of a wheel bearing apparatus 201 of the invention. In this third embodiment, those portions corresponding to the portions of the first embodiment of Figs. 1 to 5 will be designated respectively by identical reference numerals used in Figs. 1 to 5, and explanation thereof will be omitted.

The wheel bearing apparatus 201 of the third embodiment differs from the wheel bearing apparatus 1 of the first embodiment in that instead of the parkerizing treatment, grease is coated on surfaces of teeth 21 of a drive force-receiving portion 20, surfaces of teeth 25 of a drive force-transmitting portion 24, an end face 13a of a tubular portion 13 and a connecting end face 22c of a cup-shaped outer ring 22 by a grease coating treatment (In Fig. 7, only a film or coating of the grease formed on the surfaces of the teeth 21 and the end face 13a of the tubular portion 13 is shown.). Therefore, a frictional resistance of the teeth 21 and 25 of the drive force-receiving portion 20 and the drive force-transmitting portion 24 can be reduced, so that wear of the surfaces of the teeth 21 and 25 can be prevented. And besides, rust is prevented from developing on the surfaces of the teeth 21 and 25 and the end faces 13a and 22c since the grease is coated on the teeth 21 and 25 and the end faces 13a and 22c.

Although the three embodiments of the invention have been described above, the invention is not limited to these embodiments, and any other suitable embodiment of the invention can be adopted.

In each of the above embodiments, the abrasion resistant film-forming treatment (the parkerizing treatment or the plating treatment) or the film-forming treatment (the grease coating treatment) may be applied only to the wheel bearing apparatus. Namely, the film-forming treatment may be applied only to the surfaces of the teeth 21 of the drive force-receiving portion 20 and the end face 13a of the tubular portion 13. In another modified form of the invention, the film-forming treatment may be applied only to the teeth 21 of the drive force-receiving portion 20. In a further modified form of the invention, the grease coating treatment may be applied after the pakerizing treatment or the plating treatment is applied.

In each of the above embodiments, although the wheel bearing apparatus is constructed to function as the double row angular contact ball bearing, the rolling elements are not limited to the balls, but may be tapered rollers, and the wheel bearing apparatus may be constructed to function as a bearing other than such a double row angular contact ball bearing.

After the coating is formed on the driving-force receiving portion 20 and the drive force-transmitting portion 24, the constant velocity joint 3 is fasten to the inner shaft 6 by use of the fastening member 4. The fastening member works as aforementioned configuration, thereby it is possible to confirm the fitted condition of the driving-force receiving portion 20 inner shaft 6and driving-force transmitting portion 24 of the constant velocity joint 3.

Furthermore, various modifications can be made within the scope of the invention defined in the appended claims.

## Claims

1. A bearing apparatus comprising:
an inner ring including a flange and a tubular portion which has an end face;
an outer ring coupled to the inner ring through a plurality of rolling elements; and
a drive force-receiving portion including a plurality of teeth which is radially formed on the end face in a direction intersecting an axial direction; and
a coating which coat a surface of the each teeth.

2. The bearing apparatus according to claim 1, wherein the coating includes an abrasion resistance coating.

3. The bearing apparatus according to claim 1, wherein the coating includes a grease.

4. The bearing apparatus according to claim 2, wherein the abrasion resistance coating is a phosphate coating.

5. The bearing apparatus according to claim 4, wherein the phosphate coating is a zinc phosphate coating film.

6. The bearing apparatus according to claim 4, wherein the phosphate coating is a manganese phosphate coating film.

7. The bearing apparatus according to claim 2, wherein the abrasion resistance coating is a metal plating.

8. The bearing apparatus according to claim 7, wherein the metal plating is a zinc plating.

9. The bearing apparatus according to claim 7, wherein the metal plating is a chromium plating.

10. The bearing apparatus according to claim 7, wherein the metal plating is a nickel plating.

11. A method of manufacturing bearing apparatus comprising:
preparing a bearing apparatus which comprises an inner ring including a flange a tubular portion which has an end face; an outer ring coupled to the inner ring through a plurality of rolling elements; and a drive force-receiving portion including a plurality of teeth which is radially formed on the end face in a direction intersecting an axial direction; and
a coating process to form a coating on each of the teeth.

12. The method according to claim 11, wherein the coating process includes a phosphate coating process.

13. The method according to claim 11, wherein the coating process includes a grease coating.

14. The method according to claim 11, wherein the coating process includes a metal plating process.
